# EUROPÄISCHE PATENTSCHRIFT

(11) **EP 1 527 490 B1**
(45) Veröffentlichungstag und Bekanntmachung des Hinweises auf die Patenterteilung: **17.05.2006**
(21) Anmeldenummer: 03784119.4
(22) Anmeldetag: 31.07.2003
(51) Int. Cl.: H01M 8/02, H01M 8/24

(54) **MEMBRAN-ELEKTRODENEINHEIT MIT POLYIMIDSCHICHT**
MEMBRANE ELECTRODE UNIT COMPRISING A POLYIMIDE LAYER
UNITE MEMBRANE-ELECTRODE A COUCHE DE POLYIMIDE

(30) Priorität: 02.08.2002 DE 10235360
(43) Veröffentlichungstag der Anmeldung: 04.05.2005
(73) Patentinhaber: Pemeas GmbH, 65926 Frankfurt am Main (DE)
(72) Erfinder: PAWLIK, Jürgen, 65931 Frankfurt (DE); BAURMEISTER, Jochen, 65817 Eppstein (DE); PADBERG, Christoph, 65195 Wiesbaden (DE)
(74) Vertreter: Luderschmidt, Schüler & Partner GbR
(86) Internationale Anmeldenummer: PCT/EP2003/008460
(87) Internationale Veröffentlichungsnummer: WO 2004/015797

(56) Entgegenhaltungen:
- PATENT ABSTRACTS OF JAPAN vol. 014, no. 394 (E-0969), 24. August 1990 (1990-08-24) -& JP 02 148570 A (HITACHI LTD), 7. Juni 1990 (1990-06-07) & DATABASE WPI Derwent Publications Ltd., London, GB; AN 1990220066 "Fuel cell with phosphoric acid electrolyte-its in which circumferences of electrode and matrix are formed by heat melting film and non-heat melting film" ((HITA) HITACHI LTD)
- PATENT ABSTRACTS OF JAPAN vol. 012, no. 435 (E-683), 16. November 1988 (1988-11-16) -& JP 63 170860 A (HITACHI LTD), 14. Juli 1988 (1988-07-14) & DATABASE WPI Derwent Publications Ltd., London, GB; AN 1988238314 "Fuel cell electrode structure-has fluoro resin film and polyimide plastic sheet covering electrode end to form thermal insulating air interlayer" ((HITA) HITACHI LTD)
- PATENT ABSTRACTS OF JAPAN vol. 011, no. 055 (E-481), 20. Februar 1987 (1987-02-20) -& JP 61 216253 A (HITACHI LTD), 25. September 1986 (1986-09-25)

## Beschreibung

Die vorliegende Erfindung betrifft Membran-Elektrodeneinheiten mit langer Lebensdauer, aufweisend zwei elektrochemisch aktive Elektroden, die durch eine Polymer-Elektrolyt-Membran getrennt.

In Polymer-Elektrolyt-Membran(PEM)-Brennstoffzellen werden heute als protonenleitende Membranen fast ausschließlich sulfonsäuremodifizierte Polymere eingesetzt. Dabei finden überwiegend perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks auf 80 - 100 °C. Höhere Betriebstemperaturen können ohne einen Verlust an Leistung der Brennstoffzelle nicht realisiert werden. Bei Temperaturen, die für ein gegebenes Druckniveau, oberhalb des Taupunktes von Wasser liegen, trocknet die Membran komplett aus, und die Brennstoffzelle liefert keine elektrische Energie mehr, da der Widerstand der Membran auf so hohe Werte steigt, daß kein nennenswerter Stromfluß mehr erfolgt.

Eine Membran-Elektroden-Einheit mit integrierter Dichtung, die auf der zuvor dargelegten Technologie beruht, wird beispielsweise in US 5,464,700 beschrieben. Dabei sind im äußeren Bereich der Membran-Elektroden-Einheit, auf den nicht durch die Elektroden abgedeckten Flächen der Membran Filme aus Elastomeren vorgesehen, die zugleich die Dichtung zu den Bipolarplatten und zum Außenraum darstellen.

Durch diese Maßnahme kann eine Ersparnis an sehr kostspieligen Membranmaterial erzielt werden. Weitere Vorteile, die durch diesen Aufbau erzielt werden, beziehen sich auf die Kontamination der Membran. Eine Verbesserung der Langzeitstabilität wird in US 5,464,700 nicht dargestellt. Dies ergibt sich auch aus den sehr niedrigen Betriebstemperaturen. In der Beschreibung der in US 5,464,700 dargelegten Erfindung wird darauf hingewiesen, daß die Betriebstemperatur der Zelle auf bis 80 °C beschränkt ist. Elastomere sind auch in der Regel nur für Dauergebrauchstemperaturen bis 100 °C geeignet. Höhere Einsatztemperaturen sind mit Elastomeren nicht zu erreichen. Die hierin beschriebene Technik ist also für Brennstoffzellen mit Betriebstemperaturen über 100 °C nicht geeignet.

Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser.

Insbesondere bei der Verwendung von sogenannten Reformaten aus Kohlenwasserstoffen sind im Reformergas deutliche Mengen an Kohlenmonoxid enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden.

Um diese Temperaturen zu erreichen, werden im allgemeinen Membranen mit neuen Leitfähigkeitsmechanismen verwendet. Ein Ansatz hierfür ist der Einsatz von Membranen, die ohne den Einsatz von Wasser eine elektrische Leitfähigkeit zeigen. Die erste erfolgversprechende Entwicklung in diese Richtung ist in der Schrift WO96/13872 dargelegt.

In dieser Schrift wird auch eine erste Methode zur Herstellung von Membran-Elektroden-Einheiten beschrieben. Dabei werden zwei Elektroden auf die Membran gepreßt, die nur jeweils einen Teil der beiden Hauptflächen der Membran abdecken. Auf den verbleibenden freie Teil der Hauptflächen der Membran wird in der Zelle eine PTFE-Dichtung gedrückt, so daß die Gasräume von Anode und Kathode gegeneinander und gegen die Umgebung abgedichtet sind. Jedoch wurde festgestellt, daß eine derart hergestellte Membran-Elektroden-Einheiten nur bei sehr kleine Zellflächen von 1 cm² eine hohe Haltbarkeit hat. Werden größere Zellen, insbesondere mit einer Fläche von mindestens 10 cm² hergestellt, so ist die Haltbarkeit der Zellen bei Temperaturen von größer 150°C auf weniger als 100 Stunden begrenzt.

Eine weitere Hochtemperatur-Brennstoffzelle wird in der Druckschrift JP-A-2001-196082 offenbart. Hierin wird eine Elektroden-Membran-Einheit dargestellt, die mit einer Polyimid-Dichtung versehen ist. Problematisch an diesem Aufbau ist jedoch, daß zur Abdichtung zwei Membranen notwendig sind, zwischen denen ein Dichtring aus Polyimid vorgesehen ist. Da die Dicke der Membran aus technischen Gründen möglichst gering gewählt werden muß, ist die Dicke des Dichtrings zwischen den beiden in JP-A-2001-196082 beschriebenen Membranen äußerst begrenzt. In Langzeitversuchen wurde festgestellt, daß ein derartiger Aufbau ebenfalls nicht über einen Zeitraum von mehr als 1000 Stunden stabil ist.

Des Weiteren beschreiben die Druckschriften JP-A-02148570 und JP-A-63170860 Brennstoffzellen, die Polyimide umfassen.

Aufgabe der vorliegenden Erfindung ist daher verbesserte Membran-Elektroden-Einheiten und Brennstoffzellen bereitzustellen, die eine besonders hohe Lebensdauer aufweisen.

Die Brennstoffzellen sollten insbesondere bei Betriebstemperaturen oberhalb von 100°C eingesetzt werden können und ohne zusätzliche Brenngasbefeuchtung auskommen. Insbesondere sollten die Membran-Elektroden-Einheiten permanenten oder wechselnden Druckdifferenzen zwischen Anode und Kathode widerstehen können.

Des weiteren war es mithin Aufgabe der vorliegenden Erfindung eine Membran-Elektroden-Einheit zur Verfügung zu stellen, die einfach und kostengünstig hergestellt werden kann.

Gelöst werden die zuvor genannten Aufgaben durch Membran-Elektroden-Einheit aufweisend zwei elektrochemisch aktive Elektroden, die durch eine Polymer-Elektrolyt-Membran getrennt werden, wobei auf den beiden Oberflächen der Polymer-Elektrolyt-Membran, die in Kontakt mit den Elektroden stehen, jeweils eine Polyimid-Schicht vorgesehen ist.

Für die Zwecke der vorliegenden Erfindung geeignete Polymer-Elektrolyt-Membranen sind an sich bekannt. Im allgemeinen werden hierfür Membranen eingesetzt, die Säuren umfassen, wobei die Säuren kovalent an Polymere gebunden sein können. Des weiteren kann ein flächiges Material mit einer Säure dotiert werden, um eine geeignete Membran zu bilden

Als flächige Materialien können beispielsweise Polymerfolien, insbesondere Folien umfassend basische Polymere, die auch als Blend mit anderen Polymeren vorliegen können, eingesetzt werden. Des weiteren können als flächiges Material auch chemisch inerte Träger, vorzugsweise keramische Werkstoffen, insbesondere Siliziumcarbide (SiC) wie sie in US-A-4017664 und US-A-4695518 beschrieben sind, eingesetzt werden. Gemäß einem besonderen Aspekt der vorliegenden Erfindung sind diese Materialien nach einer Dotierung mit Säure zum Transport von Protonen nach dem Grotthus Mechanismus befähigt (K.-D. Kreuer, Chem. Mater. 1996, 8, 610-641).

Als mit Mineralsäure dotierte basische Polymermembran kommen nahezu alle bekannten Polymermembranen in Betracht, bei denen die Protonen transportiert werden können. Hierbei sind Säuren bevorzugt, die Protonen ohne zusätzliches Wasser, z.B. mittels des sogenannten Grotthus Mechanismus, befördern können.

Als basisches Polymer im Sinne der vorliegenden Erfindung wird vorzugsweise ein basisches Polymer mit mindestens einem Stickstoffatom in einer Wiederholungseinheit verwendet.

Die Wiederholungseinheit im basischen Polymer enthält gemäß einer bevorzugten Ausführungsform einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Eine besonders bevorzugte Gruppe von basischen Polymeren stellen Polyazole dar. Ein basisches Polymer auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII) 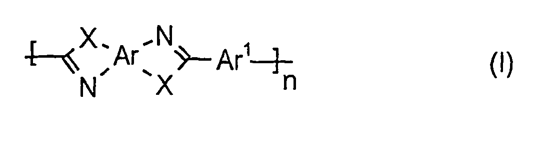 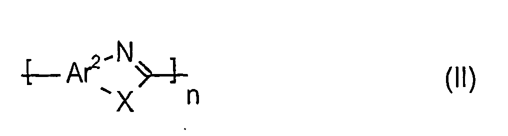 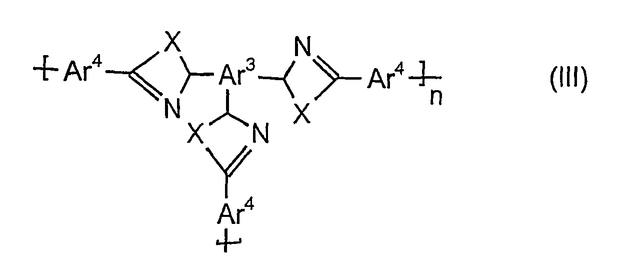 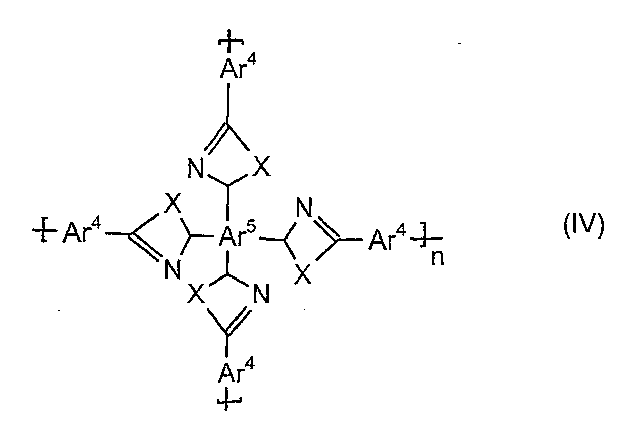 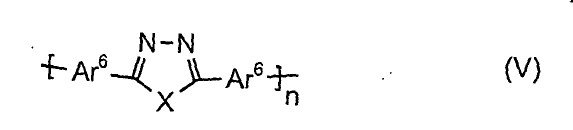 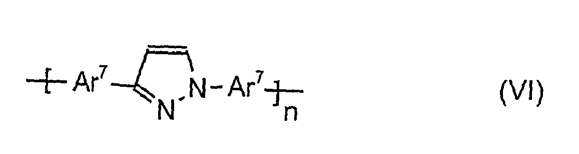 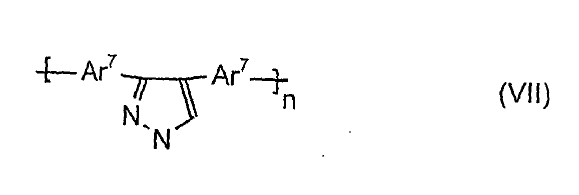 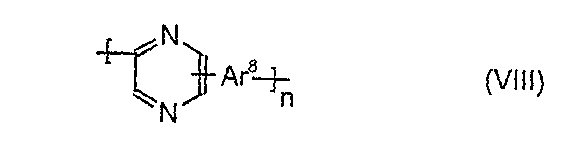 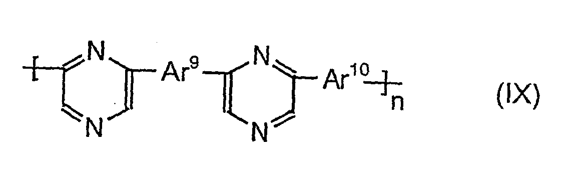 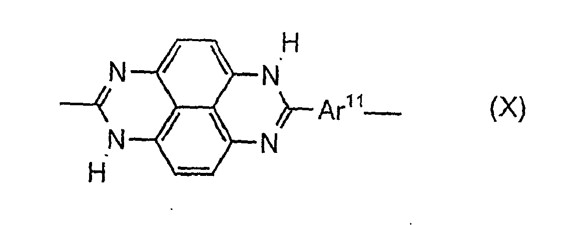 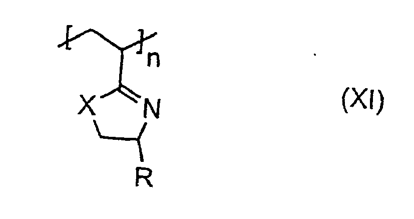 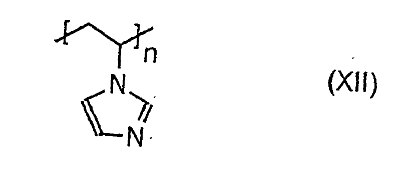 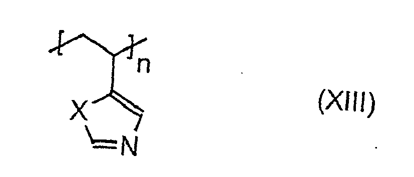 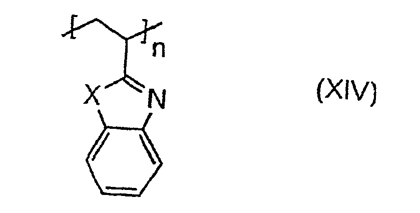 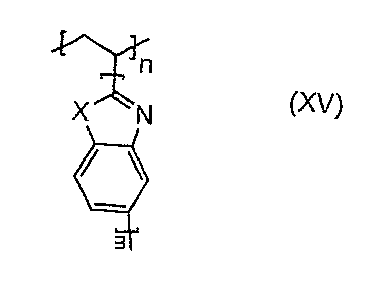 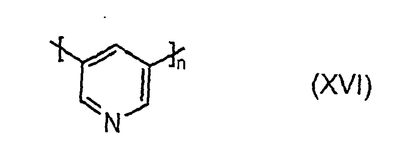 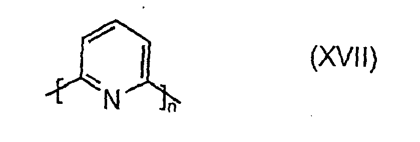 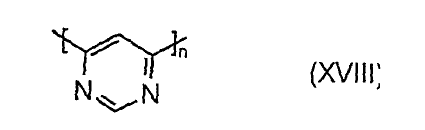 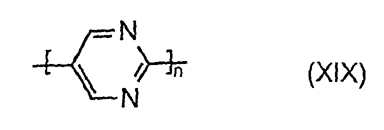 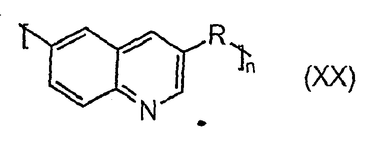 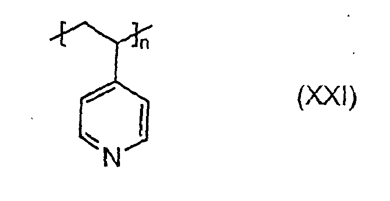 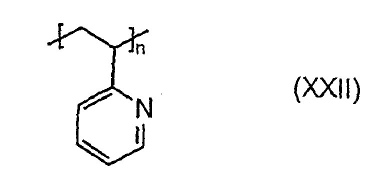 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 9- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht mit der Maßgabe, dass R in Formel XX eine divalente Gruppe ist und
- n, m: eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 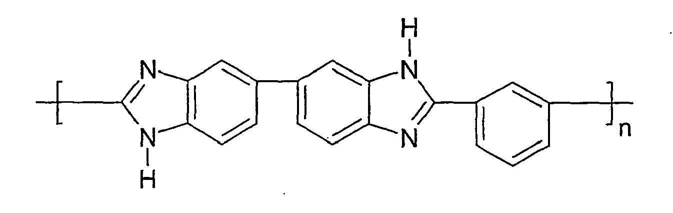 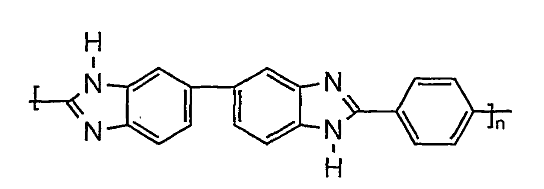 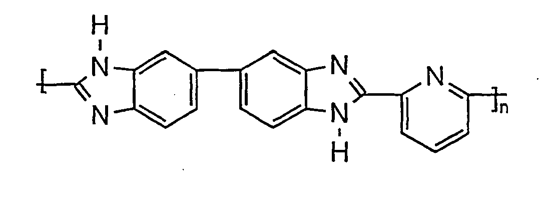 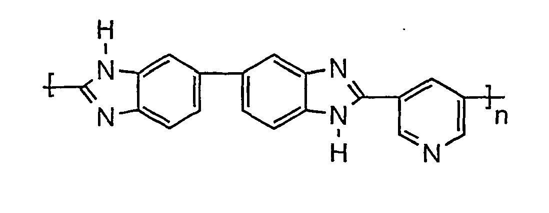 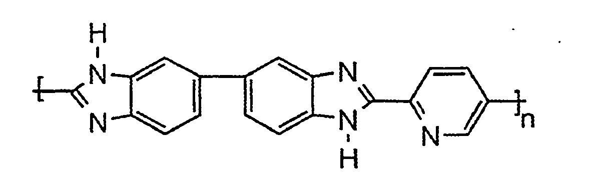 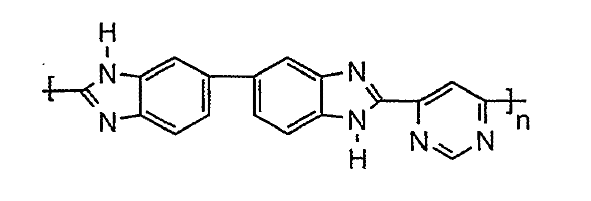 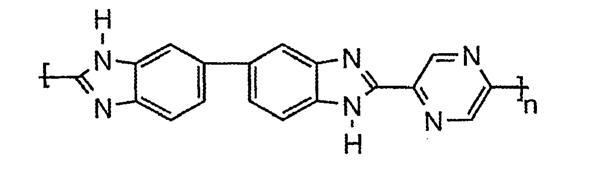 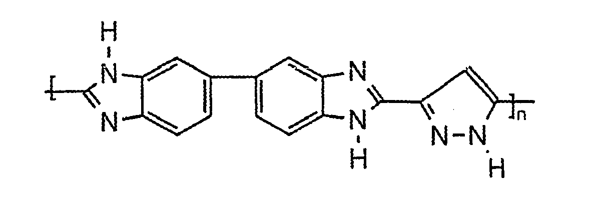 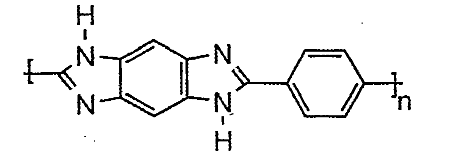 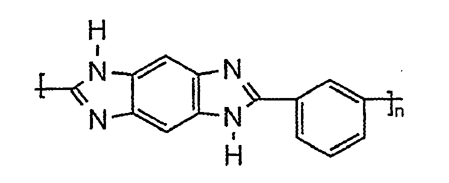 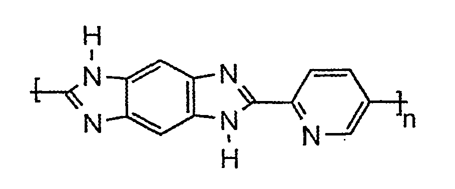 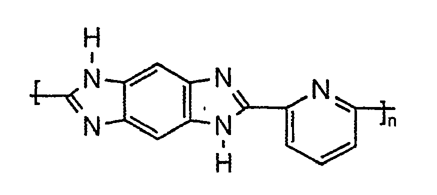 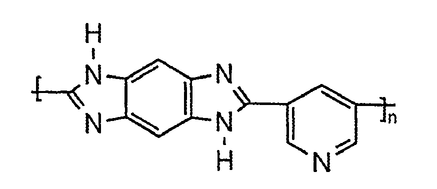 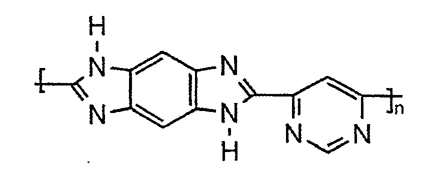 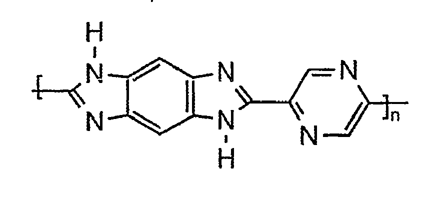 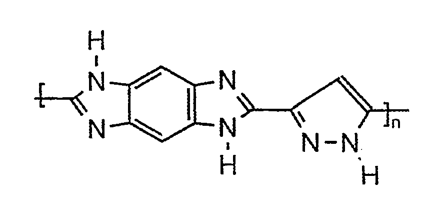 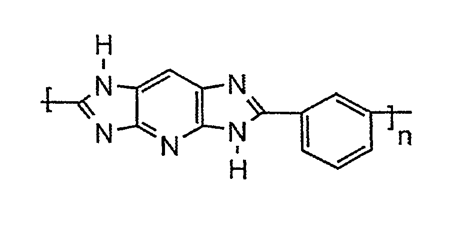 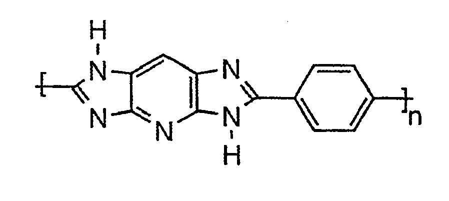 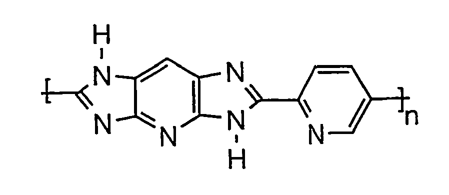 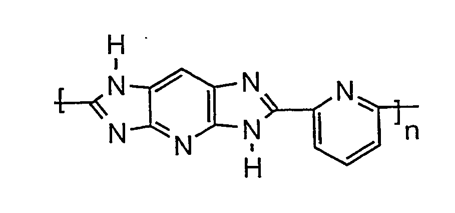 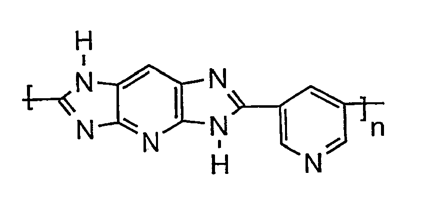 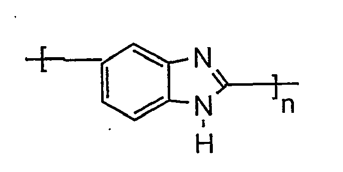 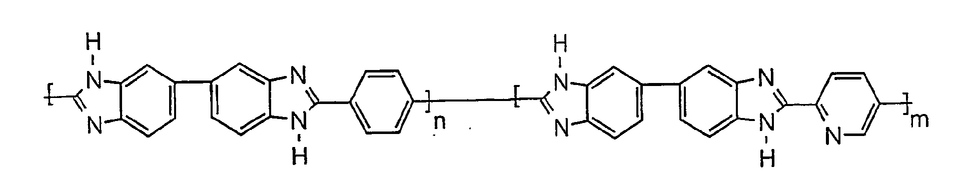 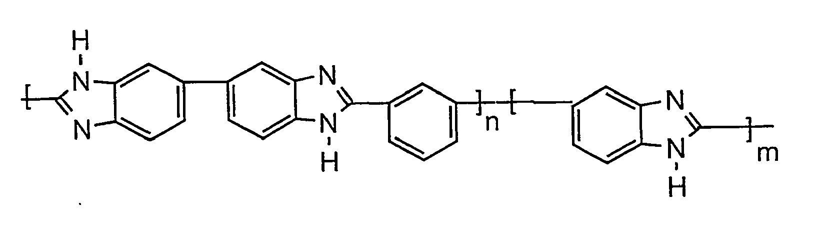 wobei n und m eine ganze Zahl größer gleich 10, vorzugsweise größer gleich 100 ist.

Die eingesetzten Polyazole, insbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,8 bis 10 dl/g, insbesondere 1 bis 10 dl/g.

Die Herstellung derartiger Polyazole ist bekannt, wobei ein oder mehrere aromatische Tetra-Amino-Verbindungen mit ein oder mehreren aromatischen Carbonsäuren bzw. deren Estern, die mindestens zwei Säuregruppen pro Carbonsäure-Monomer enthalten, in der Schmelze zu einem Präpolymer umgesetzt werden. Das entstehende Präpolymer erstarrt im Reaktor und wird anschließend mechanisch zerkleinert. Das pulverförmige Präpolymer wird üblich in einer Festphasen-Polymerisation bei Temperaturen von bis zu 400°C endpolymerisiert.

Zu den bevorzugten aromatischen Carbonsäuren gehören unter anderem Di-carbonsäuren und Tri-carbonsäuren und Tetra-Carbonsäuren bzw. deren Estern oder deren Anhydride oder deren Säurechloride. Der Begriff aromatische Carbonsäuren umfaßt gleichermaßen auch heteroaromatische Carbonsäuren.

Vorzugsweise handelt es sich bei den aromatischen Dicarbonsäuren um Isophthalsäure, Terephthalsäure, Phthalsäure, 5-Hydroxyisophthatsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthelsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tri-, tetra-carbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.
Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthafintetracarbonsäure.
Bevorzugt handelt es sich bei den eingesetzten heteroaromatischen Carbonsäuren um heteroaromatischen Di-carbonsäuren und Tri-carbonsäuren und Tetra-Carbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bevorzugt handelt es sich bei den eingesetzten aromatischen und - heteroaromatischen Diaminocarbonsäuren um Diaminobenzoesäure und deren Mono- und Dihydrochloridderivate.

Bevorzugt werden Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Zu den bevorzugten aromatische Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3' ,4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bevorzugte Polybenzimidazole sind unter dem Handelsnamen ®Celazole von Celanese AG kommerziell erhältlich.

Neben den vorstehend genannten Polymeren kann auch ein Blend das weitere Polymere enthält eingesetzt werden. Die Blendkomponente hat dabei im Wesentlichen die Aufgabe die mechanischen Eigenschaften zu verbessern und die Materialkosten zu verringern. Eine bevorzugte Blendkomponente ist dabei Polyethersulfon wie in der Patentanmeldung DE-A-10052242 beschrieben.

Zur Herstellung von Polymerfolien wird das Polyazol in einem weiteren Schritt in polaren, aprotischen Lösemitteln wie beispielsweise Dimethylacetamid (DMAc) gelöst und eine Folie mittels klassischer Verfahren erzeugt.

Zur Entfernung von Lösemittelresten kann die so erhaltene Folie mit einer Waschflüssigkeit behandelt werden. Vorzugsweise ist diese Waschflüssigkeit ausgewählt aus der Gruppe der Alkohole, Ketone, Alkane (aliphatische und cycloaliphatische), Ether (aliphatische und cycloaliphatische), Ester, Carbonsäuren, wobei die vorstehenden Gruppenmitglieder halogeniert sein können, Wasser, anorganischen Säuren (wie z.B. H₃PO₄, H₂SO₄) und Gemische derselben eingesetzt.

Insbesondere werden C₁-C₁₀ Alkohole, C₂-C₅ Ketone, C₁-C₁₀-Alkane (aliphatische und cycloaliphatische), C₂-C₆-Ether (aliphatische und cycloaliphatische), C₂-C₅ Ester, C₁-C₃ Carbonsäuren, Dichlormethan, Wasser, anorganischen Säuren (wie z.B. H₃PO₄, H₂SO₄) und Gemische derselben eingesetzt. Von diesen Flüssigkeiten ist Wasser besonders bevorzugt.

Nach dem Waschen kann die Folie getrocknet werden, um die Waschflüssigkeit zu entfernen. Die Trocknung erfolgt in Abhängigkeit vom Partial-Dampfdruck der gewählten Behandlungs-Flüssigkeit. Üblicherweise erfolgt die Trocknung bei Normaldruck und Temperaturen zwischen 20°C und 200°C. Eine schonendere Trocknung kann auch im Vakuum erfolgen. Anstelle der Trocknung kann in die Membran auch abgetupft und somit von überschüssiger Behandlungsflüssigkeit befreit werden. Die Reihenfolge ist unkritisch.

Durch die zuvor beschriebene Reinigung der Polyazolfolie von Lösungsmittelresten verbessern sich überraschend die mechanischen Eigenschaften der Folie. Diese Eigenschaften umfassen insbesondere den E-Modul, die Reißfestigkeit und die Bruchzähigkeit der Folie.

Zusätzlich kann der Polymerfilm weitere Modifizierungen, beispielsweise durch Vernetzung wie in der Patentanmeldung DE-A-10110752 oder in WO 00/44816 aufweisen. In einer bevorzugten Ausführungsform enthält die eingesetzte Polymerfolie aus einem basischen Polymer und mindestens einer Blendkomponente zusätzlich einem Vernetzer wie in der Patentanmeldung DE-A-10140147 beschrieben.

Anstelle der mittels Klassischer Verfahren hergestellten Polymerfoilen können auch die polyazolhaltigen Polymermembranen wie in den Patentanmeldungen DE-A-10117686, DE-A-10144815, DE-A-10117687 beschrieben, eingesetzt werden.

Die Dicke der Polyazolfolien kann in weiten Bereichen liegen. Vorzugsweise liegt die Dicke der Polyazolfolie vor einer Dotierung mit Säure im Bereich von 5 µm bis 2000 µm, besonders bevorzugt 10µm bis 1000 µm, ohne daß hierdurch eine Beschränkung erfolgen soll.

Um eine Protonen-Leitfähigkeit zu erzielen, werden diese Folien mit einer Säure dotiert. Säuren umfassen in diesem Zusammenhang alle bekannten Lewis- und Bronsted-Säuren, vorzugsweise anorganische Lewis- und Bronsted-Säuren.

Weiterhin ist auch der Einsatz von Polysäuren möglich, insbesondere Isopolysäuren und Heteropolysäuren sowie von Mischungen verschiedener Säuren. Dabei bezeichnen im Sinne der vorliegenden Erfindung Heteropolysäuren anorganische Polysäuren mit mindestens zwei verschiedenen Zentralatomen, die aus jeweils schwachen, mehrbasischen Sauerstoff-Säuren eines Metalls (vorzugsweise Cr, Mo, V, W) und eines Nichtmetalls (vorzugsweise As, I, P, Se, Si, Te) als partielle gemischte Anhydride entstehen. Zu ihnen gehören unter anderen die 12-Molybdatophosphorsäure und die 12-Wolframatophosphorsäure.

Über den Dotierungsgrad kann die Leitfähigkeit der Polyazolfolie beeinflußt werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 30, insbesondere zwischen 5 und 18, bevorzugt.

Besonders bevorzugte Dotierungsmittel sind Schwefelsäure und Phosphorsäure. Ein ganz besonders bevorzugtes Dotierungsmittel ist Phosphorsäure (H₃PO₄). Hierbei werden im allgemeinen hochkonzentrierte Säuren eingesetzt. Gemäß einem besonderen Aspekt der vorliegenden Erfindung beträgt die Konzentration der Phosphorsäure mindestens 50% Gew.-%, insbesondere mindestens 80 Gew.-%, bezogen auf das Gewicht des Dotierungsmittels.

Des weiteren können dotierte Polyazolfolien auch durch ein Verfahren erhalten werden umfassend die Schritte umfassend die Schritte
I) Lösen des Polyazol-Polymeren in Polyphosphorsäure,
II) Erwärmen der Lösung erhältlich gemäß Schritt A) unter Inertgas auf Temperaturen von bis zu 400°C,
III) Bilden einer Membran unter Verwendung der Lösung des Polyazol-Polymeren gemäß Schritt II) auf einem Träger und
IV) Behandlung der in Schritt III) gebildeten Membran bis diese selbsttragend ist.

Des weiteren können dotierte Polyazolfolien durch ein Verfahren erhalten werden umfassend die Schritte
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren .
D) Behandlung der in Schritt C) gebildeten Membran (bis diese selbsttragend ist).

Die in Schritt A) einzusetzenden aromatischen bzw. heteroaromatschen Carbonsäure- und Tetra-Amino-Verbindungen wurden zuvor beschrieben.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden. Die in Schritt A) erzeugte Mischung weist ein Gewichtsverhältnis Polyphosphorsäure zu Summe aller Monomeren von 1:10000 bis 10000:1, vorzugsweise 1:1000 bis 1000:1, insbesondere 1: 100 bis 100:1, auf.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.

Die gemäß Schritt B) erzeugte Schicht hat eine Dicke zwischen 20 und 4000 µm, vorzugsweise zwischen 30 und 3500 µm, insbesondere zwischen 50 und 3000 µm.

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei. Behandlung der gemäß Schritt C) erzeugten Polymerschicht in Gegenwart von Feuchtigkeit bei Temperaturen und für eine Dauer ausreichend bis die Schicht eine ausreichende Festigkeit für den Einsatz in Brennstoffzellen besitzt. Die Behandlung kann soweit erfolgen, daß die Membran selbsttragend ist, so daß sie ohne Beschädigung vom Träger abgelöst werden kann.

Gemäß Schritt C) wird das in Schritt B) erhaltene flächige Gebilde auf eine Temperatur von bis zu 350°C, vorzugsweise bis zu 280°C und besonders bevorzugt im Bereich von 200°C bis 250°C erhitzt. Die in Schritt C) einzusetzenden Inertgase sind in der Fachwelt bekannt. Zu diesen gehören insbesondere Stickstoff sowie Edelgase, wie Neon, Argon, Helium.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 3000 µm, vorzugsweise zwischen 20 und 2000 µm, insbesondere zwischen 20 und 1500 µm, die selbsttragend ist. Die in der Polyphosphorsäureschicht gemäß Schritt B) Vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Daue, Temperatur und Umgebungsfeuchtigkeit, ist die Konzentration an Phosphorsäure und damit die Leitfähigkeit der Polymermembran einstellbar. Die Konzentration der Phosphorsäure wird als Mol Säure pro Mol Wiederholungseinheit des Polymers angegeben. Durch das Verfahren umfassend die Schritte A) bis D) können Membranen mit einer besonders hohen Phosphorsäurekonzentration erhalten werden. Bevorzugt ist eine Konzentration (Mol Phosphorsäure bezogen auf eine Wiederholeinheit der Formel (I), beispielsweise Polybenzimidazol) zwischen 10 und 50, insbesondere zwischen 12 und 40. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Gemäß einer Abwandlung des zur beschriebenen Verfahrens, bei dem dotierte Polyazolfölien durch die Verwendung von Polyphosphorsäure hergestellt werden, kann die Herstellung dieser Folien auch durch ein Verfahren erfolgen umfassend die Schritte
1) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
2) Lösen des gemäß Schritt 1) erhaltenen festen Prä-Polymeren in Polyphosphorsäure,
3) Erwärmen der Lösung erhältlich gemäß Schritt 2) unter Inertgas auf Temperaturen von bis zu 300°C, vorzugsweise bis zu 280°C unter Ausbildung des gelösten Polyazol-Polymeren .
4) Bilden einer Membran unter Verwendung der Lösung des Polyazol-Polymeren gemäß Schritt 3) auf einem Träger und
5) Behandlung der in Schritt 4) gebildeten Membran bis diese selbsttragend ist.

Die unter den Punkten 1) bis 5) dargestellten Verfahrensschritten wurden zuvor für die Schritte A) bis D) näher erläutert, wobei hierauf, insbesondere im Hinblick auf bevorzugte Ausführungsformen Bezug genommen wird.

Eine Membran, insbesondere eine Membran auf Basis von Polyazolen, kann durch Einwirken von Hitze in Gegenwart von Luftsauerstoff an der Oberfläche noch vernetzt werden. Diese Härtung der Membranoberfläche verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen, Eine weitere Methode ist die Bestrahlung mit β-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße Membran-Elektroden-Einheit weist auf beiden Oberflächen der Polymer-Elektrolyt-Membran, die in Kontakt mit den Elektroden stehen, eine Polyimid-Schicht auf, die zumindest partiell die Oberflächen der Membran bedeckt, die nicht mit den Elektroden in Kontakt stehen. Im allgemeinen wird durch die Polyimid-Schichten mindestens 80% der von den Elektroden freien Fläche der Membran bedeckt.

Gemäß einer bevorzugten Ausführungsform der vorliegenden Erfindung sind die Oberflächen der Polymer-Elektrolyt-Membran vollständig von den zwei Elektroden und den Polyimid-Schichten bedeckt.

Polyimide sind in der Fachwelt bekannt. Diese Polymere weisen Imid-Gruppen als wesentliche Struktureinheiten der Hauptkette auf und sind beispielsweise in Ullmann's Encyclopedia of Industrial Chemistry 5^{th} Ed. on CD-ROM, 1998, Keyword Polyimides beschrieben.

Zu den Polyimiden gehören auch Polymere, die neben Imid- auch Amid-(Polyamidimide), Ester- (Polyesterimide) u. Ether-Gruppen (Polyetherimide) als Bestandteile der Hauptkette enthalten.

Im Rahmen der vorliegenden Erfindung verwendbare Polyimide zeigen vorzugsweise eine Dauergebrauchstemperatur von mindestens 190°C, bevorzugt mindestens 220°C und besonders bevorzugt mindestens 250°C gemessen nach MIL-P-46112B, paragraph 4.4.5.

Bevorzugte Polyimide weisen wiederkehrende Einheiten der Formel (VI) auf, 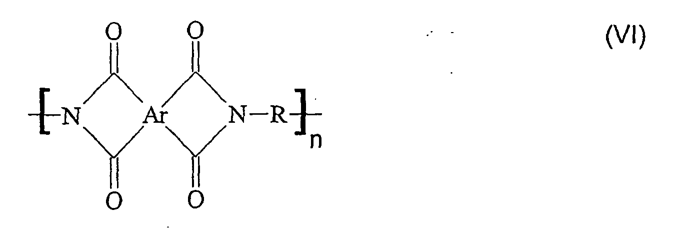 worin der Rest Ar die zuvor genannte Bedeutung hat und der Rest R eine Alkylgruppe oder eine zweibindige aromatische oder heteroaromatische Gruppe mit 1 bis 40 Kohlenstoffatome darstellt. Bevorzugt stellt der Rest R eine zweibindige aromatische oder heteroaromatische Gruppe dar, die sich von Benzol, Naphthalin, Biphenyl, Diphenylether, Diphenylketon, Diphenylmethan, Diphenyldimethylmethan, Bisphenon, Diphenylsulfon, Chinolin, Pyridin, Bipyridin, Anthracen, Thiadiazol und Phenanthren, die gegebenenfalls auch substituiert sein können, ableiten. Der Index n deutet an, daß die wiederkehrenden Einheiten Teil von Polymeren darstellen.

Derartige Polyimide sind kommerziell unter den Handelsnamen ®Kapton, ®Vespel, ®Toray und ®Pyralin von DuPont sowie ®Ultem von GE Plastics und ®Upilex von Ube Industries erhältlich.

Die Dicke der Polyimid-Schicht liegt vorzugsweise im Bereich von 5 µm bis 1000 µm, insbesondere 10 µm bis 500 µm und besonders bevorzugt 25 µm bis 100 µm.

Die sich auf der Polymer-Elektrolyt-Membran befindlichen Polyimid-Schichten können jeweils einen Rahmen bilden.

Gemäß einem besonderen Aspekt der vorliegenden Erfindung können die Polyimid-Schichten mit Fluorpolymeren versehen werden. Hierdurch kann überraschend die Langzeitstabilität der MEAs verbessert werden.

Geeignete Fluorpolymere sind in der Fachwelt bekannt. Hierzu gehören unter anderem Polyfluortetraethylen (PTFE) und Poly(tetrarfluorethylen-co-hexafluorpropylen) (FEP). Die sich auf der Polyimid-Schicht befindliche Schicht aus aus Fluorpolymeren weist im allgemeinen eine Dicke von mindestens 0,5 µm, insbesondere von mindestens 2,5 µm auf. Diese Schicht kann zwischen der Polymer-Elektrolyt-Membran und der Polyimid-Schicht vorgesehen sein. Des weiteren kann die Schicht auch auf der von der Polymer-Elektrolyt-Membran abgewandten Seite aufgebracht sein. Darüber hinaus können beide Oberflächen der Polyimid-Schicht mit einer Schicht aus Fluorpolymeren versehen sein.

Mit Fluorpolymeren versehene Polyimid-Folien, die erfindungsgemäß verwendet werden können, sind kommerziell unter dem Handelsnamen ®Kapton FN von DuPont erhältlich.

Die zwei Polyimid-Schichten können sich über die Polymer-Elektrolyt-Membran hinaus erstrecken und flächig miteinander in Kontakt stehen. Die miteinander in Kontakt stehenden Flächen der Polyimid-Schichten können hierbei verschweißt werden. Eine derartige Verbindung kann insbesondere durch zumindest ein Schicht aus Fluorpolymeren erleichtert werden.

Die zwei Polyimid-Schichten stehen üblich mit elektrisch leitenden Separatorplatten in Kontakt, die typisch mit Strömungsfeldrinnen auf den den Elektroden zugewandten Seiten versehen sind, um die Verteilung von Reaktantenfluiden zu ermöglichen. Die Separatorplatten werden üblich aus Graphit oder aus leitfähigem, wärmebeständigen Kunststoff gefertigt.

Eine erfindungsgemäße Membran-Elektroden-Einheit weist zwei elektrochemisch aktive Elektroden auf. Der Begriff "elektrochemisch aktiv" bezeichnet, daß die Elektroden in der Lage sind die Oxidation von H₂ und die Reduktion von O₂ zu katalysieren. Diese Eigenschaft kann durch Beschichtung der Elektroden mit Platin und/oder Ruthenium erzielt werden. Der Begriff Elektrode bedeutet, daß das Material eine Elektronenleitfähigkeit aufweist, wobei die Elektrode wahlweise eine Edelmetallschicht aufweisen kann, ohne hierauf beschränkt zu sein. Derartige Elektroden sind bekannt und beispielsweise in US-A-4,191,618, US-A-4,212,714 und US-A-4,333,805 beschrieben. Üblich werden hierfür flächige, elektrisch leitende und säureresistente Gebilde eingesetzt. Zu diesen gehören beispielsweise Graphitfaser-Papiere, Kohlefaser-Papiere, Graphitgewebe und/oder Papiere, die durch Zugabe von Ruß leitfähig gemacht wurden.

Die elektrochemisch aktive Fläche der Elektroden bezeichnet die Fläche, die mit der Polymer-Elektrolyt-Membran in Kontakt steht und an der die zuvor dargelegten Redoxreaktionen stattfinden können. Die vorliegende Erfindung ermöglicht die Bildung von besonders großen elektrochemisch aktiven Flächen. Gemäß einem besonderen Aspekt der vorliegenden Erfindung beträgt die Größe dieser elektrochemisch aktiven Fläche mindestens 2 cm², insbesondere mindestens 5 cm². und bevorzugt mindestens 10 cm², ohne daß hierdurch eine Beschränkung erfolgen soll.

Gemäß einer besonderen Ausführungsform kann mindestens eine der Elektroden aus einem kompressiblen Material bestehen. Im Rahmen der vorliegenden Erfindung ist ein kompressibles Material durch die Eigenschaft gekennzeichnet, daß die Elektrode ohne Verlust ihrer Integrität durch Druck auf die Hälfte, insbesondere auf ein Drittel ihrer ursprünglichen Dicke gepreßt werden kann.

Diese Eigenschaft weisen im allgemeinen Elektroden aus Graphitgewebe und/oder Papier, das durch Zugabe von Ruß leitfähig gemacht wurde, auf.

Überraschend kann die Langzeitstabilität der Membran-Elektroden-Einheit verbessert werden, indem mindestens eine der Polyimid-Schichten mit mindestens einer der Elektroden in Kontakt steht. Gemäß einer bevorzugten Ausführungsform stehen beide Polyimid-Schichten mit jeweils einer Elektrode in Kontakt. Hierbei kann die Polyimid-Schicht zwischen der Membran und der Elektrode angeordnet sein. Des weiteren kann die Polyimidschicht auch mit der Oberfläche in Kontakt stehen, die von der Membran abgewandt ist.

Im allgemeinen beträgt die Kontaktfläche von Polyimid-Schicht und der Elektrode mindestens 0,2 mm², insbesondere mindestens 5 mm² ohne daß hierdurch eine Beschränkung erfolgen soll. Die obere Grenze der Kontaktfläche zwischen Elektrode und Polyimid-Schicht ergibt sich aus wirtschaftlichen Überlegungen. Vorzugsweise ist die Kontaktfläche kleiner oder gleich 100%, insbesondere kleiner oder gleich 80% und besonders bevorzugt kleiner oder gleich 60%, bezogen auf die elektrochemisch aktive Fläche.

Hierbei kann die Polyimid-Schicht über die Kantenflächen in Kontakt mit der Elektrode stehen. Die Kantenflächen sind die Flächen, die aus der Dicke der Elektrode bzw. der Polyimid-Schicht und der jeweiligen Länge bzw. Breite dieser Schichten gebildet werden.

Vorzugsweise steht die Polyimid-Schicht mit der Elektrode über die Oberfläche in Kontakt, die über die Länge und die Breite der Polyimid-Schicht bzw. der Elektrode definiert wird.

Diese Kontaktfläche der Elektrode kann mit Fluorpolymer versehen werden, um die Haftung zwischen Polyimidschicht und Elektrode zu verbessern.

Die Herstellung von erfindungsgemäßen Membran-Elektroden-Einheit ist dem Fachmann offensichtlich. Im allgemeinen werden die verschiedenen Bestandteile der Membran-Elektroden-Einheit übereinandergelegt und durch Druck und Temperatur miteinander verbunden. Im allgemeinen wird bei einer Temperatur im Bereich von 10 bis 300°C, insbesondere 20°C bis 200° und mit einem Druck im Bereich von 1 bis 1000 bar, insbesondere von 3 bis 300 bar laminiert.

Eine bevorzugte Ausführungsform kann beispielsweise dadurch hergestellt werden, daß zunächst ein Rahmen aus einem Polyimidfilm gefertigt wird. Dieser Rahmen wird anschließend auf eine konfektionierte, mit einem Katalysator, beispielsweise Platin, beschichtete Elektrode gelegt, wobei der Rahmen mit der Elektrode überlappt. Die Überlappung beträgt im allgemeinen 0,2 bis 5 mm. Auf den Polymerfilmrahmen wird nun ein Metallblech gelegt, das dieselbe Form und Dimensionen hat, wie der Polymerfilm, d.h. das die freie Elektrodenfläche nicht abdeckt. Hierdurch kann die Polymermaske und der darunter liegende Teil der Elektrode zu einem innigen Verbund verpreßt werden, ohne daß die elektrochemisch aktive Fläche der Elektrode beschädigt wird. Durch das Metallblech wird der Polyimid-Rahmen mit der Elektrode unter den zuvor genannten Bedingungen laminiert.

Zur Herstellung einer erfindungsgemäßen Membran-Elektroden-Einheit wird eine Polymer-Elektrolyt-Membran zwischen zwei der zuvor erhaltenen Polyimidrahmen-Elektroden-Einheiten gelegt. Anschließend wird ein Verbund durch Druck und Temperatur erzeugt.

Die fertige Membran-Elektroden-Einheit (MEA) ist nach dem Abkühlen betriebsbereit und kann in einer Brennstoffzelle verwendet werden.

Besonders überraschend wurde festgestellt, daß erfindungsgemäße Membran-Elektroden-Einheiten aufgrund ihrer Dimensionstabilität bei schwankenden Umgebungstemperaturen und Luftfeuchtigkeit problemlos gelagert oder versendet werden können. Auch nach längerer Lagerung oder nach Versand an Orte mit deutlich unterschiedlichen klimatischen Bedingungen stimmen die Dimensionen der MEA problemlos für den Einbau in Brennstoffzellenstacks. Die MEA muß für einen externen Einbau dann vor Ort nicht mehr konditioniert werden, was die Herstellung der Brennstoffzelle vereinfacht und Zeit und Kosten spart.

Ein Vorteil der erfindungsgemäßen MEAs ist, daß sie den Betrieb der Brennstoffzelle bei Temperaturen oberhalb 120 °C ermöglichen. Dies gilt für gasförmige und flüssige Brennstoffe, wie z.B. Wasserstoff enthaltende Gase, die z.B. in einem vorgeschalteten Reformierungsschritt aus Kohlenwasserstoffen hergestellt werden. Als Oxidanz kann dabei z.B. Sauerstoff oder Luft verwendet werden.

Ein weiterer Vorteil der erfindungsgemäßen MEAs ist, daß sie beim Betrieb oberhalb 120 °C auch mit reinen Platinkatalysatoren, d.h. ohne einen weiteren Legierungsbestandteil, eine hohe Toleranz gegen Kohlenmonoxid aufweisen. Bei Temperaturen von 160 °C kann z.B. mehr als 1 % CO im Brenngas enthalten sein, ohne daß dies zu einer merklichen Reduktion der Leistung der Brennstoffzelle führt.

Die erfindungsgemäßen MEAs können in Brennstoffzellen betrieben werden, ohne daß die Brenngase und die Oxidanzen trotz der möglichen hohen Betriebstemperaturen nicht befeuchtet werden müssen. Die Brennstoffzelle arbeitet dennoch stabil und die Membran verliert ihre Leitfähigkeit nicht. Dies vereinfacht das gesamte Brennstoffzellensystem und bringt zusätzliche Kostenersparnisse, da die Führung des Wasserkreislaufs vereinfacht wird. Weiter wird hierdurch auch das Verhalten bei Temperaturen unterhalb 0 °C des Brennstoffzellensystems verbessert.

Die erfindungsgemäßen MEAs erlauben überraschend, daß die Brennstoffzelle problemlos auf Raumtemperatur und darunter abgekühlt werden kann und danach wieder in Betrieb genommen werden kann, ohne an Leistung zu verlieren. Herkömmliche auf Phosphorsäure basierende Brennstoffzellen müssen dagegen auch beim Abschalten des Brennstoffzellensystems immer auf einer Temperatur oberhalb 80 °C gehalten werden, um eine irreversible Schädigung zu vermeiden.

Des weiteren zeigen die MEAs der vorliegenden Erfindung eine sehr hohe Langzeitstabilität. Es wurde festgestellt, daß eine erfindungsgemäße Brennstoffzelle über lange Zeiten z.B. mehr als 5000 Stunden bei Temperaturen von mehr als 120 °C mit trockenen Reaktionsgasen kontinuierlich betrieben werden kann, ohne daß eine merkliche Leistungsdegradation feststellbar ist (vgl. Figur 1). Die dabei erzielbaren Leistungsdichten sind auch nach einer derartig langen Zeit sehr hoch.

Darüber hinaus können die erfindungsgemäßen MEAs kostengünstig und einfach hergestellt werden.

Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

## Patentansprüche

1. Membran-Elektroden-Einheit aufweisend zwei elektrochemisch aktive Elektroden, die durch eine Polymer-Elektrolyt-Membran getrennt werden, **dadurch gekennzeichnet, daß** auf den beiden Oberflächen der Polymer-Elektrolyt-Membran, die in Kontakt mit den Elektroden stehen, jeweils eine Polyimid-Schicht vorgesehen ist, wobei die Membran-Elektroden-Einheit den Betrieb einer Brennstoffzelle bei Temperaturen oberhalb 120°C ermöglicht.

2. Membran-Elektroden-Einheit gemäß Anspruch 1, **dadurch gekennzeichnet, daß** die Dicke der Polyimid-Schicht im Bereich von 5 µm bis 1000 µm liegt.

3. Membran-Elektroden-Einheit gemäß Anspruch 1 oder 2, **dadurch gekennzeichnet, daß** die Polyimid-Schichten, die sich auf der Polymer-Elektrolyt-Membran befinden, jeweils einen Rahmen bilden.

4. Membran-Elektroden-Einheit gemäß einem oder mehreren der vorhergehenden Ansprüche, **dadurch gekennzeichnet, daß** die zwei Elektroden eine elektrochemisch aktive Fläche aufweisen, deren Größe mindestens 2 cm² beträgt.

5. Membran-Elektroden-Einheit gemäß einem oder mehreren der vorhergehenden Ansprüche, **dadurch gekennzeichnet, daß** mindestens eine der Polyimid-Schichten mit Fluorpolymeren beschichtet ist.

6. Membran-Elektroden-Einheit gemäß Anspruch 5, **dadurch gekennzeichnet, daß** die Schicht aus Fluorpolymeren eine Dicke von mindestens 0,5 µm aufweist.

7. Membran-Elektroden-Einheit gemäß Anspruch 5 oder 6, **dadurch gekennzeichnet, daß** das Fluorpolymer FEP ist.

8. Membran-Elektroden-Einheit gemäß einem oder mehreren der vorhergehenden Ansprüche, **dadurch gekennzeichnet, daß** die Polymer-Elektrolyt-Membran Polyazole umfaßt.

9. Membran-Elektroden-Einheit gemäß einem oder mehreren der vorhergehenden Ansprüche, **dadurch gekennzeichnet, daß** die Polymer-Elektrolyt-Membran mit einer Säure dotiert ist.

10. Membran-Elektroden-Einheit gemäß Anspruch 9, **dadurch gekennzeichnet, daß** die Polymer-Elektrolyt-Membran mit Phosphorsäure dotiert ist.

11. Membran-Elektroden-Einheit gemäß Anspruch 10, **dadurch gekennzeichnet, daß** die Konzentration der Phosphorsäure mindestens 50% Gew.-% beträgt.

12. Membran-Elektroden-Einheit gemäß einem oder mehreren der vorhergehenden Ansprüche, **dadurch gekennzeichnet, daß** die Membran durch ein Verfahren erhältlich ist umfassend die Schritte
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren .
D) Behandlung der in Schritt C) gebildeten Membran in Gegenwart von ausreichender Feuchtigkeit bis diese selbsttragend ist, wodurch die anwesende Polyphosphorsäure durch partielle Hydrolyse unter Ausbildung niedermolekularer Polyphosphorsäure und/oder Phosphorsäure zur Verfestigung der Membran beiträgt.

13. Membran-Elektroden-Einheit gemäß Anspruch 10, 11 oder 12, **dadurch gekennzeichnet, daß** der Dotierungsgrad zwischen 3 und 50 beträgt.

14. Membran-Elektroden-Einheit gemäß einem oder mehreren der vorhergehenden Ansprüche, **dadurch gekennzeichnet, daß** mindestens eine der Elektroden aus einem kompressiblen Material ist.

15. Membran-Elektroden-Einheit gemäß einem oder mehreren der vorhergehenden Ansprüche, **dadurch gekennzeichnet, daß** mindestens eine der Polyimid-Schichten mit mindestens einer der Elektroden in Kontakt steht.

16. Membran-Elektroden-Einheit gemäß Anspruch 15, **dadurch gekennzeichnet, daß** die Oberflächen der Polymer-Elektrolyt-Membran vollständig von den zwei Elektroden und den Polyimid-Schichten bedeckt sind.

17. Membran-Elektroden-Einheit gemäß Anspruch 15 oder 16, **dadurch gekennzeichnet, daß** die Kontaktfläche von Polyimid-Schicht und der Elektrode mindestens 5 mm² beträgt.

18. Membran-Elektroden-Einheit gemäß Anspruch 17, **dadurch gekennzeichnet, daß** die Kontaktfläche kleiner oder gleich 100%, bezogen auf die elektrochemisch aktive Fläche, ist.

19. Membran-Elektroden-Einheit gemäß einem oder mehreren der Ansprüche 15 bis 18, **dadurch gekennzeichnet, daß** die Kontaktfläche der Elektrode mit Fluorpolymer versehen ist.

20. Membran-Elektroden-Einheit gemäß einem oder mehreren der vorhergehenden Ansprüche, **dadurch gekennzeichnet, daß** sich die zwei Polyimid-Schichten über die Membran hinaus erstrecken und flächig miteinander in Kontakt stehen.

21. Membran-Elektroden-Einheit gemäß Anspruch 19, daß die zwei Polyimid-Schichten miteinander verschweißt sind.

22. Membran-Elektroden-Einheit gemäß einem oder mehreren der vorhergehenden Ansprüche, **dadurch gekennzeichnet, daß** die zwei Polyimid-Schichten mit elektrisch leitenden Separatorplatten in Kontakt stehen.

23. Membran-Elektroden-Einheit gemäß einem oder mehreren der vorhergehenden Ansprüche, **dadurch** gekenhzeichnel, daß die Oberflachen der Polymer-Elektrolyt-Membran vollständig von den zwei Elektroden und den Polyimid-Schichten bedeckt sind.

24. Brennstoffzelle aufweisend mindestens eine Membran-Elektroden-Einheit gemäß einem oder mehreren der Ansprüche 1 bis 23.

## Claims

1. A membrane electrode assembly comprising two electrochemically active electrodes separated by a polymer electrolyte membrane, **characterized in that** there is a polyimide layer on each of the two surfaces of the polymer electrolyte membrane that are in contact with the electrodes, with the membrane electrode assembly allowing the fuel cell to be operated at temperatures above 120°C

2. The membrane electrode assembly of claim 1, **characterized in that** the thickness of the polyimide layer is in the range from 5 µm to 1000 µm.

3. The membrane electrode assembly of claim 1 or 2, **characterized in that** the polyimide layers on the polymer electrolyte membrane each form a frame.

4. The membrane electrode assembly of one or more of the preceding claims, **characterized in that** the two electrodes have an electrochemically active area whose size is at least 2 cm².

5. The membrane electrode assembly of one or more of the preceding claims, **characterized in that** at least one of the polyimide layers is coated with fluoropolymers.

6. The membrane electrode assembly of claim 5, **characterized in that** the layer of fluoropolymer has a thickness of at least 0.5 µm.

7. The membrane electrode assembly of claim 5 or 6, **characterized in that** the fluoropolymer is FEP.

8. The membrane electrode assembly of one or more of the preceding claims, **characterized in that** the polymer electrolyte membrane comprises polyazoles.

9. The membrane electrode assembly of one or more of the preceding claims, **characterized in that** the polymer electrolyte membrane is doped with an acid.

10. The membrane electrode assembly of claim 9, **characterized in that** the polymer electrolyte membrane is doped with phosphoric acid.

11. The membrane electrode assembly of claim 10, **characterized in that** the concentration of the phosphoric acid is at least 50 by weight %.

12. The membrane electrode assembly of one or more of the preceding claims, **characterized in that** the membrane is obtainable by a method comprising the steps of
A) mixing one or more aromatic tetraamino compounds with one or more aromatic carboxylic acids and/or esters thereof containing at least two acid groups per carboxylic acid monomer, or mixing one or more aromatic and/or heteroaromatic diaminocarboxylic acids in polyphosphoric acid to form a solution and/or dispersion,
B) applying a layer using the mixture according to step A) to a support or to an electrode,
C) heating the sheetlike structure/layer obtainable according to step B) under inert gas to temperatures of up to 350°C, preferably up to 280°C, to form the polyazole polymer,
D) treating the membrane formed in step C) in the presence of sufficient moisture until it is self-supporting, the polyphosphoric acid present undergoing partial hydrolysis to form low molecular mass polyphosphoric acid and/or phosphoric acid and thereby contributing to strengthening the membrane

13. The membrane electrode assembly of claim 10, 11 or 12, **characterized in that** the degree of doping is between 3 and 50.

14. The membrane electrode assembly of one or more of the preceding claims, **characterized in that** at least one of the electrodes is made of a compressible material.

15. The membrane electrode assembly of one or more of the preceding claims, **characterized in that** at least one of the polyimide layers is in contact with at least one of the electrodes.

16. The membrane electrode assembly of claim 15, **characterized in that** the surfaces of the polymer electrolyte membrane are completely covered by the two electrodes and the polyimide layers.

17. The membrane electrode assembly of claim 15 or 16, **characterized in that** the contact area between polyimide layer and electrode is at least 5 mm².

18. The membrane electrode assembly of claim 17, **characterized in that** the contact area is less than or equal to 100%, based on the electrochemically active area.

19. The membrane electrode assembly of one or more of claims 15 to 18, **characterized in that** the contact area of the electrode is provided with fluoropolymer.

20. The membrane electrode assembly of one or more of the preceding claims, **characterized in that** the two polyimide layers extend beyond the membrane and are in flat contact with one another.

21. The membrane electrode assembly of claim 19, that the two polyimide layers are welded to one another.

22. The membrane electrode assembly of one or more of the preceding claims, **characterized in that** the two polyimide layers are in contact with electrically conducting separator plates.

23. The membrane electrode assembly of one or more of the preceding claims, **characterized in that** the surfaces of the polymer electrolyte membrane are covered completely by the two electrodes and the polyimide layers.

24. A fuel cell comprising at least one membrane electrode assembly according to one or more of claims 1 to 23.

## Revendications

1. L'ensemble électrodes-membrane qui présente deux électrodes électrochimiques actifs, qui sont séparés l'un de l'autre par une membrane-polymère-électrolyte, **caractérisée en ce que** sur les deux parties de la membrane-polymère-électrolyte, parties qui sont en contact avec les électrodes, est prévue une couche de polyamide, de telle manière que l'ensemble électrodes-membrane puisse donner la possibilité à une pile à combustion de functionner aux températures supérieures à 120° C.

2. L'ensemble électrodes-membrane selon la revendication 1 **caractérisée en ce que** l'épaisseur de la couche de polyamide est compris dans l'intervalle 5 µm - 1000 µm.

3. L'ensemble électrodes-membrane selon la revendication 1 ou 2, **caractérisée en ce que** les couches de polyamide, qui se trouvent sur la membrane-polymère-électrolyte, forment chacune d'eux en partie un cadre.

4. L'ensemble électrodes-membrane selon l'une ou plusieurs des revendications antérieures, **caractérisée en ce que** les deux électrodes présentent une surface électrochimique active, dont la grandeur est au moins 2 cm².

5. L'ensemble électrodes-membrane selon l'une ou plusieurs des revendications antérieures, **caractérisée en ce qu'**on moins l'une des couches de polyamide est couverte par des polymères fluorées.

6. L'ensemble électrodes-membrane selon la revendication 5, **caractérisée en ce que** la couche de polymères fluorées à une épaisseur au moins de 0.5 µm.

7. L'ensemble électrodes-membrane selon la revendication 5 ou 6, **caractérisée en ce que** la polymère fluorée est une FEP (éthylène-propène fluoré).

8. L'ensemble électrodes-membrane selon l'une ou plusieurs des revendications antérieures, **caractérisée en que** la membrane-polymère-électrolyte comprend des polyazoles.

9. L'ensemble électrodes-membrane selon l'une ou plusieurs des revendications antérieures, **caractérisée en que** la membrane-polymère-électrolyte est dopée par un acide.

10. L'ensemble électrodes-membrane selon la revendication 9, **caractérisée en ce que** la membrane-polymère-électrolyte est dopée par un acide phosphorique.

11. L'ensemble électrodes-membrane selon la revendication 10, **caractérisée en ce que** l'acide phosphorique a une concentration de minimum 50% en poids.

12. L'ensemble électrodes-membrane selon l'une ou plusieurs des revendications antérieures, **caractérisée en que** la membrane peut être obtenue par un procédé composé des suivantes étapes:
A) Le mélange d'une ou de plusieurs tétra-amino-liaisons aromatiques avec un ou plusieurs acides carboxyliques aromatiques, respectivement avec des esters de ces acides, qui contiennent au moins deux groupes d'acide par monomère-acide carboxylique ou le mélange d'un ou de plusieurs diamino-acides carboxyliques aromatiques et/ou hétéro-aromatiques dans le poly-acide phosphorique par la formation d'une solution et/ou d'une dispersion;
B) L'application d'une couche par l'utilisation du mélange obtenu dans l'étape A sur un portant ou sur un électrode;
C) Le chauffage par l'intermédiaire du gaz inerte de la formation/ de la couche plane obtenu conformément à l'étape B) à une température de jusqu'à 350° C, préférable jusqu'à 280° C par la formation du polymère - polyazole.
D) Le traitement de la membrane formée à l'étape C, dans la présence d'une humidité suffisante jusqu'au moment où elle devient auto-portante, par laquelle l'acide poly-phosphorique présent contribue à la solidification de la membrane par l'hydrolyse partielle par la formation de l'acide poly phosphorique avec la masse moléculaire réduite et/ou de l'acide phosphorique.

13. L'ensemble électrodes-membrane selon les revendications 10, 11 ou 12, **caractérisée en ce que** le degré de dopage est situé dans l'intervalle 3 et 50.

14. L'ensemble électrodes-membrane selon l'une ou plusieurs des revendications antérieures, **caractérisée en qu'**on moins l'un des électrodes est fait d'un matériel compressible.

15. L'ensemble électrodes-membrane selon l'une ou plusieurs des revendications antérieures, **caractérisée en qu'**on moins l'une des couches de polyamide est en contact avec au moins l'un des électrodes.

16. L'ensemble électrodes-membrane selon la revendication 15, **caractérisée en ce que** les surfaces de la membrane-polymère-électrolyte sont couvertes complètement par les deux électrodes et par les couches de polyamide.

17. L'ensemble électrodes-membrane selon la revendication 15 ou 16, **caractérisée en ce que** la surface de contact de la couche de polyamide et de l'électrode est au moins de 5 mm².

18. L'ensemble électrodes-membrane selon la revendication 17, **caractérisée en ce que** la surface de contact est inférieure ou 100% égale, en rapport avec la surface électrochimique active.

19. L'ensemble électrodes-membrane selon l'une ou plusieurs des revendications 15 à 18, **caractérisée en ce que** les surfaces de contact des électrodes sont prévues avec de polymère fluorée.

20. L'ensemble électrodes-membrane selon l'une ou plusieurs des revendications antérieures, **caractérisée en ce que** les deux couches de polyamides progressent en dehors de la limite de la membrane et qu'elles se trouvent en contact plan l'une avec l'autre.

21. L'ensemble électrodes-membrane selon la revendication 19, **caractérisée en ce que** les deux couches de polyamides sont soudées l'une de l'autre.

22. L'ensemble électrodes-membrane selon l'une ou plusieurs des revendications antérieures, **caractérisé en ce que** les deux couches de polyamide se trouvent en contact avec des plaques séparatrices conductrices électriques.

23. L'ensemble électrodes-membrane selon l'une ou plusieurs des revendications antérieures, **caractérisé en ce que** les surfaces de la membrane-polymère-électrolyte sont couvertes complètement par les deux électrodes et par les couches de polyamide.

24. La pile à combustion qui présente au moins un ensemble électrodes-membrane selon l'une ou plusieurs des revendications de 1 à 23.
